(19) Europäisches Patentamt
European Patent Office
Office européen des brevets

(11) **EP 4 411 966 A1**

(12) **EUROPEAN PATENT APPLICATION**
published in accordance with Art. 153(4) EPC

(43) Date of publication:
**07.08.2024 Bulletin 2024/32**

(21) Application number: **22875782.9**

(22) Date of filing: **09.09.2022**

(51) International Patent Classification (IPC):
*H01M 50/489* $^{(2021.01)}$   *H01M 4/13* $^{(2010.01)}$
*H01M 50/414* $^{(2021.01)}$   *H01M 50/423* $^{(2021.01)}$
*H01M 50/434* $^{(2021.01)}$   *H01M 50/443* $^{(2021.01)}$
*H01M 50/446* $^{(2021.01)}$

(52) Cooperative Patent Classification (CPC):
H01M 4/13; H01M 50/414; H01M 50/423;
H01M 50/434; H01M 50/443; H01M 50/446;
H01M 50/489; Y02E 60/10

(86) International application number:
**PCT/JP2022/033952**

(87) International publication number:
**WO 2023/053910 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2021 JP 2021160012**

(71) Applicant: **Zeon Corporation**
**Tokyo 100-8246 (JP)**

(72) Inventors:
• **TAKISHIMA, Keisuke**
**Tokyo 100-8246 (JP)**
• **KITAZAWA, Yuzo**
**Tokyo 100-8246 (JP)**

(74) Representative: **Maiwald GmbH**
**Elisenhof**
**Elisenstraße 3**
**80335 München (DE)**

(54) **COMPOSITION FOR NONAQUEOUS SECONDARY BATTERY FUNCTIONAL LAYER, FUNCTIONAL LAYER FOR NONAQUEOUS SECONDARY BATTERY, SEPARATOR FOR NONAQUEOUS SECONDARY BATTERY, AND NONAQUEOUS SECONDARY BATTERY**

(57)    Provided is a composition for a non-aqueous secondary battery functional layer containing non-conductive particles, a water-soluble polymer, and water, wherein the non-conductive particles have a BET specific surface area of 25 m$^2$/g or less, and the following parameter P is 35 or more. Parameter P = packing rate of composition for non-aqueous secondary battery functional layer/Log(BET specific surface area of non-conductive particles), given that:

packing rate of composition for non-aqueous secondary battery functional layer (%) = {(solid content in composition for non-aqueous secondary battery functional layer (volume%) $\times$ volume of composition for non-aqueous secondary battery functional layer in test tube)/volume of sediment layer} $\times$ 100%

EP 4 411 966 A1

**Description**

TECHNICAL FIELD

The present disclosure relates to a composition for a non-aqueous secondary battery functional layer, a functional layer for a non-aqueous secondary battery, a separator for a non-aqueous secondary battery, and a non-aqueous secondary battery.

BACKGROUND

Non-aqueous secondary batteries (hereinafter, also referred to as "secondary batteries") such as lithium ion secondary batteries have characteristics such as compact size, light weight, high energy density, and the ability to be repeatedly charged and discharged, and are used in a wide variety of applications. A non-aqueous secondary battery generally includes battery members such as a positive electrode, a negative electrode, and a separator that isolates the positive electrode and the negative electrode from each other and prevents short circuiting between the positive and negative electrodes.

Battery members including functional layers for imparting desired performance (for example, heat resistance or strength) on these battery members are used in secondary batteries. Specifically, a separator obtained by forming a functional layer on a separator substrate or an electrode obtained by forming a functional layer on an electrode substrate including an electrode mixed material layer on a current collector may, for example, be used as a battery member. Moreover, a functional layer composed of a porous membrane layer formed by binding non-conductive particles using a binder (binding material) is one example of a functional layer that can improve heat resistance, strength, etc. of a battery member. This functional layer is formed by, for example, applying a composition for a functional layer that contains non-conductive particles, various polymers that can function as binders, and a dispersion medium onto the surface of a substrate (separator substrate, electrode substrate, etc.), and then drying the applied composition for a functional layer.

In recent years, much effort has been directed at improving compositions for non-aqueous secondary battery functional layers (hereinafter, also referred to simply as "compositions for functional layers") that are used in functional layer formation with the aim of achieving even higher secondary battery performance.

Specifically, Patent Literature (PTL) 1 proposes a binder composition containing water and a water-soluble polymer that includes an amide group-containing monomer unit, an acid group-containing monomer unit, and a hydroxyl group-containing monomer unit and in which the proportional contents of the amide group-containing monomer unit and the acid group-containing monomer unit are within specific ranges. By using a slurry composition for a non-aqueous secondary battery heat-resistant layer that contains this binder composition and non-conductive inorganic particles, it is possible to form a heat-resistant layer having excellent heat shrinkage resistance.

Moreover, PTL 2 proposes a composition for a non-aqueous secondary battery functional layer that can form a functional layer for a non-aqueous secondary battery having excellent vibration detachment resistance in electrolyte solution and heat shrinkage resistance as a result of a water-soluble polymer having a specific property and a water-insoluble polymer having a particle diameter within a specific range being used together in the composition.

Furthermore, PTL 3 proposes a composition for a secondary battery porous membrane containing non-conductive particles and a water-soluble polymer, wherein the water-soluble polymer includes a specific monomer unit in a specific proportion, and the water-soluble polymer has a storage modulus under a specific condition that is not less than a specific value. This composition for a secondary battery porous membrane makes it possible to produce a porous membrane that has low residual water content, that can easily be applied, and that can improve battery performance in terms of high-temperature cycle characteristics, etc.

CITATION LIST

Patent Literature

PTL 1: WO2021/020061A1
PTL 2: WO2017/195564A1
PTL 3: WO2015/122322A1

SUMMARY

(Technical Problem)

In recent years, there has been demand for reducing the thickness of functional layers with the aim of further densification of secondary batteries. However, when the thickness of a coating film obtained by applying a conventional composition for a functional layer such as described above onto a substrate has been reduced in order to achieve a thinner functional layer, there have been instances in which the obtained functional layer has had insufficient heat shrinkage resistance. There is also room for further improvement of a conventional composition for a functional layer such as described above in terms of reducing residual water content in a functional layer formed using the composition for a functional layer and improving high-temperature cycle characteristics of a secondary battery.

Accordingly, one object of the present disclosure is to provide a composition for a non-aqueous secondary battery functional layer that can form a functional layer for a non-aqueous secondary battery in which excellent heat shrinkage resistance is ensured and having low residual water content.

Another object of the present disclosure is to provide a functional layer for a non-aqueous secondary battery in which excellent heat shrinkage resistance is ensured, that has low residual water content, and that can, therefore, cause a non-aqueous secondary battery to display excellent high-temperature cycle characteristics, and also to provide a separator for a non-aqueous secondary battery including this functional layer for a non-aqueous secondary battery.

Yet another object of the present disclosure is to provide a non-aqueous secondary battery having excellent high-temperature cycle characteristics.

(Solution to Problem)

The inventors conducted diligent investigation with the aim of solving the problems set forth above. The inventors made a new discovery that with regards to a composition for a non-aqueous secondary battery functional layer containing non-conductive particles, a water-soluble polymer, and water, by setting the BET specific surface area of the non-conductive particles as not more than a specific value and by setting a parameter P, expressing a ratio of a packing rate determined using the composition for a non-aqueous secondary battery functional layer relative to a logarithm (Log) of the BET specific surface area of the non-conductive particles, as not less than a specific value, it is possible to form a functional layer for a non-aqueous secondary battery in which excellent heat shrinkage resistance is ensured and that has low residual water content. In this manner, the inventors completed the present disclosure.

Specifically, the present disclosure aims to advantageously solve the problems set forth above, and, according to the present disclosure, compositions for a non-aqueous secondary battery functional layer according to the following [1] to [8], a functional layer for a non-aqueous secondary battery according to the following [9], a separator for a non-aqueous secondary battery according to the following [10], and a non-aqueous secondary battery according to the following [11] are provided.

[1] A composition for a non-aqueous secondary battery functional layer comprising non-conductive particles, a water-soluble polymer, and water, wherein the non-conductive particles have a BET specific surface area of 25 $m^2/g$ or less, and the composition for a non-aqueous secondary battery functional layer has a parameter P, expressed by the following formula (1), of 35 or more.

$$\text{Parameter P} = \text{Packing rate of composition for non-aqueous secondary battery functional layer}/\text{Log(BET specific surface area of non-conductive particles)} \tag{1}$$

Note that a packing rate of the composition for a non-aqueous secondary battery functional layer in formula (1) is determined based on the following formula (2) by calculating a material balance from height of a sediment layer obtained when the composition for a non-aqueous secondary battery functional layer is loaded into a test tube and is subjected to centrifugal sedimentation.

$$\text{Packing rate of composition for non-aqueous secondary battery functional layer (\%)} = \{(\text{Solid content in composition for non-aqueous secondary battery functional layer (volume\%)} \times \text{Volume of composition for non-aqueous secondary battery functional layer in test tube})/\text{Volume of sediment layer}\} \times 100\% \tag{2}$$

When the BET specific surface area of the non-conductive particles is set as not more than a specific value and the parameter P, expressing a ratio of a packing rate determined using the composition for a non-aqueous secondary battery functional layer relative to a logarithm of the BET specific surface area of the non-conductive particles, is set as not less than a specific value in this manner, it is possible to form a functional layer for a non-aqueous secondary battery in which excellent heat shrinkage resistance is ensured and that has low residual water content.

Note that the term "water-soluble polymer" as used in the present disclosure refers to a polymer for which insoluble content is less than 1.0 mass% when 0.5 g of the polymer is dissolved in 100 g of water at a temperature of 25°C.

Also note that the term "BET specific surface area" as used in the present disclosure refers to the nitrogen adsorption specific surface area measured by the BET method.

[2] The composition for a non-aqueous secondary battery functional layer according to the foregoing [1], wherein the water-soluble polymer includes a cross-linkable monomer unit, and proportional content of the cross-linkable monomer unit in the water-soluble polymer is not less than 0.1 mass% and not more than 10 mass%.

When the water-soluble polymer includes a cross-linkable monomer unit and the proportional content of the cross-linkable monomer unit in the water-soluble polymer is within the range set forth above in this manner, it is possible to reduce the molecular weight of the water-soluble polymer and improve coatability of the composition for a functional layer, and it is also possible to increase rigidity of the water-soluble polymer and further improve heat shrinkage resistance of a functional layer.

Note that when a polymer is said to "include a monomer unit" in the present disclosure, this means that "a polymer obtained using that monomer includes a repeating unit derived from the monomer".

Also note that the proportional content of a monomer unit in a polymer referred to in the present disclosure can be measured by a nuclear magnetic resonance (NMR) method such as $^1$H-NMR or $^{13}$C-NMR.

[3] The composition for a non-aqueous secondary battery functional layer according to the foregoing [1] or [2], wherein the composition for a non-aqueous secondary battery functional layer has a viscosity of not less than 10 mPa·s and not more than 300 mPa·s.

When the viscosity of the composition for a functional layer is within the range set forth above in this manner, coatability of the composition for a non-aqueous secondary battery functional layer can be further improved.

Note that the "viscosity" of the composition for a non-aqueous secondary battery functional layer referred to in the present disclosure can be measured by a method described in the EXAMPLES section of the present specification.

[4] The composition for a non-aqueous secondary battery functional layer according to any one of the foregoing [1] to [3], wherein the water-soluble polymer has a weight-average molecular weight of not less than 50,000 and not more than 1,000,000.

When the weight-average molecular weight of the water-soluble polymer is within the range set forth above in this manner, it is possible to suppress reduction of viscosity and further improve coatability of the composition for a functional layer, and it is also possible to further increase rigidity of the water-soluble polymer and further improve heat shrinkage resistance of a functional layer.

Note that the "weight-average molecular weight" of the water-soluble polymer referred to in the present disclosure can be measured by a method described in the EXAMPLES section of the present specification.

[5] The composition for a non-aqueous secondary battery functional layer according to any one of the foregoing [1] to [4], wherein the non-conductive particles have a volume-average particle diameter of not less than 0.05 μm and not more than 0.45 μm.

When the volume-average particle diameter of the non-conductive particles is within the range set forth above in this manner, it is possible to sufficiently ensure excellent heat shrinkage resistance, inhibit reduction of ion conductivity, and further improve high-temperature cycle characteristics of a secondary battery even with functional layer thinning and densification.

Note that the "volume-average particle diameter of non-conductive particles" referred to in the present disclosure is the particle diameter (D50) at which cumulative volume calculated from a small diameter end of a particle diameter distribution (by volume) measured by laser diffraction reaches 50%.

[6] The composition for a non-aqueous secondary battery functional layer according to any one of the foregoing [1] to [5], wherein the water-soluble polymer includes an amide group-containing monomer unit, and proportional content of the amide group-containing monomer unit in the water-soluble polymer is not less than 70 mass% and not more than 98 mass%.

When the water-soluble polymer includes an amide group-containing monomer unit and the proportional content of the amide group-containing monomer unit in the water-soluble polymer is within the range set forth above in this manner, it is possible to improve dispersion stability of the composition for a functional layer, and it is also possible to further increase rigidity of the water-soluble polymer and further improve heat shrinkage resistance of a functional layer.

[7] The composition for a non-aqueous secondary battery functional layer according to any one of the foregoing [1] to [6], wherein the water-soluble polymer includes an acid group-containing monomer unit, and proportional content of the acid group-containing monomer unit in the water-soluble polymer is not less than 1 mass% and not more than 20 mass%.

When the water-soluble polymer includes an acid group-containing monomer unit and the proportional content of the acid group-containing monomer unit in the water-soluble polymer is within the range set forth above in this manner, it is possible to further improve dispersion stability and coatability of the composition for a functional layer, and it is also possible to reduce the amount of water that adsorbs to the functional layer through interactions between the water-soluble polymer and the non-conductive particles and further reduce the residual water content in a functional layer. In addition, coatability of the composition for a functional layer can be further improved as a result of thixotropy being imparted to the composition for a functional layer.

[8] The composition for a non-aqueous secondary battery functional layer according to any one of the foregoing [1] to [7], further comprising a surfactant, wherein content of the surfactant is not less than 0.1 parts by mass and not more than 1.0 parts by mass per 100 parts by mass of the non-conductive particles.

When a surfactant is further included within the range set forth above in this manner, heat shrinkage resistance of a functional layer and coatability of the composition for a functional layer can be further improved.

[9] A functional layer for a non-aqueous secondary battery formed using the composition for a non-aqueous secondary battery functional layer according to any one of the foregoing [1] to [8].

A functional layer that is formed using the composition for a non-aqueous secondary battery functional layer set forth above in this manner has excellent heat shrinkage resistance that is ensured even upon thinning of the functional layer and can also cause a secondary battery to display excellent high-temperature cycle characteristics as a result of having low residual water content.

[10] A separator for a non-aqueous secondary battery comprising the functional layer for a non-aqueous secondary battery according to the foregoing [9].

A separator for a non-aqueous secondary battery that includes the functional layer for a non-aqueous secondary battery set forth above in this manner can cause a non-aqueous secondary battery to display excellent high-temperature cycle characteristics.

[11] A non-aqueous secondary battery comprising the separator for a non-aqueous secondary battery according to the foregoing [10].

A secondary battery that includes the separator for a non-aqueous secondary battery set forth above in this manner has excellent high-temperature cycle characteristics.

(Advantageous Effect)

According to the present disclosure, it is possible to provide a composition for a non-aqueous secondary battery functional layer that can form a functional layer for a non-aqueous secondary battery in which excellent heat shrinkage resistance is ensured and having low residual water content.

Moreover, according to the present disclosure, it is possible to provide a functional layer for a non-aqueous secondary battery in which excellent heat shrinkage resistance is ensured, that has low residual water content, and that can, therefore, cause a non-aqueous secondary battery to display excellent high-temperature cycle characteristics, and also to provide a separator for a non-aqueous secondary battery including this functional layer for a non-aqueous secondary battery.

Furthermore, according to the present disclosure, it is possible to provide a non-aqueous secondary battery having excellent high-temperature cycle characteristics.

DETAILED DESCRIPTION

The following provides a detailed description of embodiments of the present disclosure.

A presently disclosed composition for a non-aqueous secondary battery functional layer is used as a material in formation of a functional layer for a non-aqueous secondary battery. Moreover, a presently disclosed functional layer for a non-aqueous secondary battery is formed using the presently disclosed composition for a non-aqueous secondary battery functional layer. Furthermore, a presently disclosed separator for a non-aqueous secondary battery includes at least the presently disclosed functional layer for a non-aqueous secondary battery. Also, a presently disclosed non-aqueous secondary battery includes at least the presently disclosed separator for a non-aqueous secondary battery.

(Composition for non-aqueous secondary battery functional layer)

The presently disclosed composition for a non-aqueous secondary battery functional layer is a slurry composition having water as a dispersion medium that contains non-conductive particles and a water-soluble polymer and that optionally further contains other components besides the non-conductive particles and the water-soluble polymer, such as a particulate polymer and additives. Features of the presently disclosed composition for a non-aqueous secondary battery functional layer are that the non-conductive particles have a BET specific surface area of 25 $m^2$/g or less and that a parameter P, expressing a ratio of a packing rate determined using the composition for a non-aqueous secondary battery functional layer relative to a logarithm (Log) of the BET specific surface area of the non-conductive particles, is not less than a specific value.

As a result of the non-conductive particles having the specific property set forth above and the parameter P being not less than a specific value, the presently disclosed composition for a non-aqueous secondary battery functional layer can form a functional layer for a non-aqueous secondary battery in which excellent heat shrinkage resistance is ensured and that has low residual water content. Moreover, by using a functional layer for a non-aqueous secondary battery that is formed using the presently disclosed composition for a non-aqueous secondary battery functional layer, it is possible to cause a non-aqueous secondary battery to display excellent high-temperature cycle characteristics.

<Non-conductive particles>

The non-conductive particles are particles that maintain their shape without dissolving in water serving as a dispersion medium or a non-aqueous electrolyte solution of a secondary battery. In addition, the non-conductive particles are electrochemically stable and are, therefore, present stably in a functional layer in the environment of use of a secondary battery.

Various types of inorganic fine particles and organic fine particles can be used as the non-conductive particles, for example, though inorganic fine particles are typically used. In particular, the material of the non-conductive particles is preferably an electrochemically stable material that is stably present in the environment of use of a non-aqueous secondary battery. Examples of non-conductive particles that are preferable from such viewpoints include particles of oxides such as aluminum oxide (alumina), hydrous aluminum oxide (boehmite), silicon oxide, magnesium oxide (magnesia), calcium oxide, titanium oxide (titania), $BaTiO_3$, ZrO, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clay such as talc and montmorillonite. These particles may be subjected to element substitution, surface treatment, solid solution treatment, and/or the like as necessary. Of these examples, alumina, boehmite, and barium sulfate are preferable as the non-conductive particles.

One of these types of non-conductive particles may be used individually, or two or more of these types of non-conductive particles may be used in combination.

The shape of the non-conductive particles may be an ellipsoidal shape, a polygonal shape, a tetrapod shape, a plate shape, a scaly shape, or the like, for example. The aspect ratio of the non-conductive particles is not specifically limited but is preferably not less than 1.5 and not more than 20.

The BET specific surface area of the non-conductive particles is 25 $m^2$/g or less, preferably 23 $m^2$/g or less, and more preferably 20 $m^2$/g or less. When the BET specific surface area of the non-conductive particles is 25 $m^2$/g or less, residual water content in a functional layer can be reduced.

Note that the BET specific surface area of the non-conductive particles can be adjusted by altering the particle diameter and the particle shape of the non-conductive particles, for example.

The volume-average particle diameter of the non-conductive particles is preferably 0.05 $\mu$m or more, more preferably 0.1 $\mu$m or more, and even more preferably 0.15 $\mu$m or more, and is preferably 0.45 $\mu$m or less, more preferably 0.4 $\mu$m or less, and even more preferably 0.35 $\mu$m or less. When the volume-average particle diameter of the non-conductive particles is not less than any of the lower limits set forth above, reduction of ion conductivity can be inhibited, and cycle characteristics of a secondary battery can be further improved. Moreover, when the volume-average particle diameter of the non-conductive particles is not more than any of the upper limits set forth above, excellent heat shrinkage resistance can be sufficiently ensured even with functional layer thinning and densification.

<Water-soluble polymer>

The water-soluble polymer is a component that is contained as a binder in the presently disclosed composition for a functional layer. The water-soluble polymer preferably includes one or more types of monomer units selected from the group consisting of a cross-linkable monomer unit, an amide group-containing monomer unit, and an acid group-containing monomer unit. Note that the water-soluble polymer may optionally further include monomer units other than a cross-linkable monomer unit, an amide group-containing monomer unit, and an acid group-containing monomer unit (hereinafter, referred to as "other monomer units").

[Cross-linkable monomer unit]

A monomer that can form a cross-linked structure when polymerized can be used as a cross-linkable monomer that can form a cross-linkable monomer unit. Specifically, a monofunctional monomer that includes a thermally cross-linkable group and one ethylenically unsaturated bond per molecule or a polyfunctional monomer that includes two or more ethylenically unsaturated bonds per molecule may be used. Examples of the thermally cross-linkable group included in the monofunctional monomer include an epoxy group, an N-methylol amide group, an oxetanyl group, an oxazoline group, and combinations thereof.

The cross-linkable monomer may be hydrophobic or hydrophilic.

When a cross-linkable monomer is referred to as "hydrophobic" in the present disclosure, this means that the cross-linkable monomer does not have a hydrophilic group, and when a cross-linkable monomer is referred to as "hydrophilic" in the present disclosure, this means that the cross-linkable monomer has a hydrophilic group. The term "hydrophilic group" used with respect to a cross-linkable monomer refers to a carboxy group, a hydroxy group, a sulfo group, a phosphate group, an epoxy group, a thiol group, an aldehyde group, an amide group, an oxetanyl group, or an oxazoline group.

Examples of hydrophobic cross-linkable monomers include polyfunctional (meth)acrylates such as allyl (meth)acrylate, ethylene di(meth)acrylate, ethylene glycol di(meth)acrylate, diethylene glycol di(meth)acrylate, triethylene glycol di(meth)acrylate, tetraethylene glycol di(meth)acrylate, and trimethylolpropane tri(meth)acrylate; polyfunctional allyl/vinyl ethers such as dipropylene glycol diallyl ether, polyglycol diallyl ether, triethylene glycol divinyl ether, hydroquinone diallyl ether, and tetraallyloxyethane; and divinylbenzene.

Examples of hydrophilic cross-linkable monomers include vinyl glycidyl ether, allyl glycidyl ether, glycidyl methacrylate, N-methylolacrylamide, and allylmethacrylamide.

Of these examples, glycidyl methacrylate and N-methylolacrylamide are preferable as cross-linkable monomers. By using glycidyl methacrylate or N-methylolacrylamide, it is possible to further improve heat shrinkage resistance of a functional layer.

Note that one cross-linkable monomer may be used individually, or two or more cross-linkable monomers may be used in combination in a freely selected ratio.

The proportional content of cross-linkable monomer units in the water-soluble polymer is preferably 0.1 mass% or more, more preferably 0.5 mass% or more, and even more preferably 1 mass% or more, and is preferably 10 mass% or less, more preferably 9 mass% or less, and even more preferably 8 mass% or less. When the proportional content of cross-linkable monomer units is not less than any of the lower limits set forth above, rigidity of the water-soluble polymer can be increased, and heat shrinkage resistance of a functional layer can be further improved. Moreover, when the proportional content of cross-linkable monomer units is not more than any of the upper limits set forth above, the molecular weight of the water-soluble polymer can be reduced, and coatability of the composition for a functional layer can be improved.

[Amide group-containing monomer unit]

Examples of amide group-containing monomers that can form an amide group-containing monomer unit include acrylamide, methacrylamide, dimethylacrylamide, and diethylacrylamide. The term "amide group-containing monomer" as used in the present disclosure refers to a monomer having a hydrogen or an alkyl group bonded to a N atom of an amide group.

Of these examples, acrylamide is preferable as an amide group-containing monomer. By using acrylamide, it is possible to impart thermal decomposition resistance to a main skeleton of the water-soluble polymer and further improve heat shrinkage resistance of a functional layer.

Note that one amide group-containing monomer may be used individually, or two or more amide group-containing monomers may be used in combination in a freely selected ratio.

The proportional content of amide group-containing monomer units in the water-soluble polymer is preferably 70 mass% or more, more preferably 73 mass% or more, and even more preferably 80 mass% or more, and is preferably 98 mass% or less, more preferably 96 mass% or less, and even more preferably 90 mass% or less. When the proportional content of amide group-containing monomer units is not less than any of the lower limits set forth above, rigidity of the water-soluble polymer can be further increased, and heat shrinkage resistance of a functional layer can be further improved. Moreover, when the proportional content of amide group-containing monomer units is not more than any of the upper limits set forth above, dispersion stability of the composition for a functional layer can be improved.

[Acid group-containing monomer unit]

Examples of acid group-containing monomers that can form an acid group-containing monomer unit include carboxy group-containing monomers, sulfo group-containing monomers, phosphate group-containing monomers, and hydroxy group-containing monomers.

Moreover, examples of carboxy group-containing monomers include monocarboxylic acids and dicarboxylic acids. Examples of monocarboxylic acids include acrylic acid, methacrylic acid, and crotonic acid. Examples of dicarboxylic acids include maleic acid, fumaric acid, and itaconic acid.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2-hydroxypropane sulfonic acid. Note that in the present specification, "(meth)allyl" is used to indicate "allyl" and/or "methallyl", and "(meth)acryl" is used to indicate "acryl" and/or "methacryl".

Examples of phosphate group-containing monomers include 2-(meth)acryloyloxy ethyl phosphate, methyl-2-(meth)acryloyloxy ethyl phosphate, and ethyl-(meth)acryloyloxyethyl phosphate. Note that in the present specification, "(meth)acryloyl" is used to indicate "acryloyl" and/or "methacryloyl".

Examples of hydroxy group-containing monomers include 2-hydroxyethyl acrylate, 2-hydroxypropyl acrylate, 2-hydroxyethyl methacrylate, and 2-hydroxypropyl methacrylate.

Of these examples, acrylic acid is preferable as an acid group-containing monomer. By using acrylic acid, it is possible to impart anionic nature to the water-soluble polymer and inhibit adsorption of water to a functional layer through interactions between the water-soluble polymer and surfaces of the non-conductive particles.

Note that one acid group-containing monomer may be used individually, or two or more acid group-containing monomers may be used in combination in a freely selected ratio.

The proportional content of acid group-containing monomer units in the water-soluble polymer is preferably 1 mass% or more, more preferably 3 mass% or more, and even more preferably 5 mass% or more, and is preferably 20 mass% or less, more preferably 18 mass% or less, and even more preferably 15 mass% or less. When the proportional content of acid group-containing monomer units is not less than any of the lower limits set forth above, the amount of water that adsorbs to a functional layer can be further reduced and residual water content in the functional layer can be further reduced as a result of further improvement of interactions between the water-soluble polymer and the non-conductive particles, and coatability of the composition for a functional layer can be further improved as a result of thixotropy being imparted to the composition for a functional layer. Moreover, when the proportional content of acid group-containing monomer units is not more than any of the upper limits set forth above, dispersion stability and coatability of the composition for a functional layer can be further improved.

[Other monomer units]

No specific limitations are placed on other monomers that can form other monomer units that can be included in the water-soluble polymer so long as they are monomers that can be copolymerized with any one of the cross-linkable monomers, amide group-containing monomers, or acid group-containing monomers described above.

The proportional content of other monomer units included in the water-soluble polymer is preferably less than 10 mass%, more preferably less than 5 mass%, even more preferably less than 1 mass%, and particularly preferably 0 mass%.

[Molecular weight of water-soluble polymer]

The weight-average molecular weight (Mw) of the water-soluble polymer is preferably 50,000 or more, more preferably 100,000 or more, and even more preferably 200,000 or more, and is preferably 1,000,000 or less, more preferably 900,000 or less, and even more preferably 700,000 or less. When the weight-average molecular weight (Mw) of the water-soluble polymer is not less than any of the lower limits set forth above, rigidity of the water-soluble polymer can be further increased, and heat shrinkage resistance of a functional layer can be further improved. Moreover, when the weight-average molecular weight (Mw) of the water-soluble polymer is not more than any of the upper limits set forth above, coatability of the composition for a functional layer can be further improved.

Note that the weight-average molecular weight of the water-soluble polymer can, without any specific limitations, be controlled by adjusting the polymerization time in production of the water-soluble polymer or by adjusting the amounts of various additives used in production (particularly the amounts of a polymerization aid such as a chain transfer agent, a polymerization initiator, etc.), for example.

[Amount of water-soluble polymer]

The content of the water-soluble polymer in the presently disclosed functional layer composition is preferably not less than 0.5 parts by mass and not more than 5 parts by mass per 100 parts by mass of the non-conductive particles. When the content of the water-soluble polymer is within the range set forth above, heat shrinkage resistance of a functional layer can be further improved.

[Production method of water-soluble polymer]

The water-soluble polymer can be produced through polymerization of a monomer composition containing the monomers described above, carried out in an aqueous solvent such as water, for example. The proportional content of each monomer in the monomer composition can be set in accordance with the proportional content of each repeating unit (monomer unit) in the water-soluble polymer.

The polymerization method is not specifically limited and may, for example, be any of solution polymerization, suspension polymerization, bulk polymerization, and emulsion polymerization. Moreover, ionic polymerization, radical polymerization, living radical polymerization, or the like may be adopted as the polymerization reaction.

Additives such as an emulsifier, a dispersant, a polymerization initiator, and a polymerization aid that are used in polymerization can be any of those that are typically used. The used amounts of these additives may also be the same as typically used. The polymerization conditions can be adjusted as appropriate depending on the polymerization method, the type of polymerization initiator, and so forth.

<Particulate polymer>

The particulate polymer that can optionally be included in the presently disclosed composition for a functional layer is a water-insoluble polymer. The particulate polymer is dispersed in a state in which it maintains its particulate form in the composition for a functional layer and functions as a binder in conjunction with the above-described water-soluble polymer. By using the water-soluble polymer and the particulate polymer together as binders, it is possible to further improve redispersibility of the non-conductive particles, and it is also possible to increase flexibility of a functional layer formed using the composition for a functional layer.

Note that when a polymer is said to be "water-insoluble" in the present disclosure, this means that when 0.5 g of the polymer is dissolved in 100 g of water at 25°C, insoluble content is 90 mass% or more.

[Chemical composition of particulate polymer]

Any known particulate polymer that can be used as a binder in the formation of a functional layer can be used without any specific limitations as the particulate polymer. Specifically, a conjugated diene polymer, a fluoropolymer, an acrylic polymer, or the like can be used as the particulate polymer without any specific limitations, of which, an acrylic polymer is preferable. One of these particulate polymers may be used individually, or two or more of these particulate polymers may be used in combination.

The conjugated diene polymer that can preferably be used as the particulate polymer is a polymer that includes a conjugated diene monomer unit. Specific examples of the conjugated diene polymer include, but are not specifically limited to, a copolymer including an aromatic vinyl monomer unit and an aliphatic conjugated diene monomer unit (styrene-butadiene copolymer (SBR), etc.), butadiene rubber (BR), acrylic rubber (NBR) (copolymer including an acrylonitrile unit and a butadiene unit), and hydrogenated products thereof.

The fluoropolymer that can preferably be used as the particulate polymer is a polymer that includes a fluorine-containing monomer unit. Specifically, the fluoropolymer may be a homopolymer or copolymer of one or more fluorine-containing monomers or may be a copolymer of one or more fluorine-containing monomers with a monomer that does not include fluorine (hereinafter, referred to as a "non-fluorine-containing monomer").

The proportion constituted by fluorine-containing monomer units in the fluoropolymer is normally 70 mass% or more, and preferably 80 mass% or more when all monomer units in the fluoropolymer are taken to be 100 mass%. Moreover, the proportion constituted by non-fluorine-containing monomer units in the fluoropolymer is normally 30 mass% or less, and preferably 20 mass% or less when all monomer units in the fluoropolymer are taken to be 100 mass%.

Examples of fluorine-containing monomers that can form a fluorine-containing monomer unit include vinylidene fluoride, tetrafluoroethylene, hexafluoropropylene, chlorotrifluoroethylene, vinyl fluoride, and perfluoroalkyl vinyl ethers. Of these examples, vinylidene fluoride is preferable as a fluorine-containing monomer.

Moreover, a monomer that does not include fluorine and that is copolymerizable with a fluorine-containing monomer may be used as a non-fluorine-containing monomer that can form a non-fluorine-containing monomer unit. Examples thereof include 1-olefins such as ethylene, propylene, and 1-butene; aromatic vinyl compounds such as styrene, α-methylstyrene, p-t-butylstyrene, vinyltoluene, and chlorostyrene; unsaturated nitrile compounds such as (meth)acrylonitrile; (meth)acrylic acid ester compounds such as methyl (meth)acrylate, butyl (meth)acrylate, and 2-ethylhexyl (meth)acrylate; (meth)acrylamide compounds such as (meth)acrylamide, N-methylol(meth)acrylamide, and N-butoxymethyl(meth)acrylamide; carboxy group-containing vinyl compounds such as (meth)acrylic acid, itaconic acid, fumaric acid, crotonic acid, and maleic acid; epoxy group-containing unsaturated compounds such as allyl glycidyl ether and glycidyl (meth)acrylate; amino group-containing unsaturated compounds such as dimethylaminoethyl (meth)acrylate and diethylaminoethyl (meth)acrylate; sulfo group-containing unsaturated compounds such as styrene sulfonic acid, vinyl sulfonic acid, and (meth)allyl sulfonic acid; sulfate group-containing unsaturated compounds such as 3-allyoxy-2-hydroxypropane sulfuric acid; and phosphate group-containing unsaturated compounds such as (meth)acrylic acid-3-chloro-2-propyl phosphate and 3-allyloxy-2-hydroxypropane phosphoric acid.

The acrylic polymer that can preferably be used as the particulate polymer is a polymer that includes a (meth)acrylic acid ester monomer unit. Examples of (meth)acrylic acid ester monomers that can form a (meth)acrylic acid ester monomer unit include (meth)acrylic acid alkyl esters such as methyl acrylate, ethyl acrylate, butyl acrylate, methyl methacrylate, ethyl methacrylate, and 2-ethylhexyl acrylate.

Besides a (meth)acrylic acid ester monomer unit, the acrylic polymer preferably includes one or more types of monomer units selected from the group consisting of a (meth)acrylonitrile monomer unit, an acid group-containing monomer unit, and a cross-linkable monomer unit, and more preferably includes a (meth)acrylonitrile monomer unit, an acid group-containing monomer unit, and a cross-linkable monomer unit. Note that examples of acid group-containing monomers that can form an acid group-containing monomer unit and cross-linkable monomers that can form a cross-linkable monomer unit include the same monomers as previously described for the water-soluble polymer. Also note that in the present disclosure, "(meth)acrylonitrile" is used to indicate "acrylonitrile" and/or "methacrylonitrile".

[Properties of particulate polymer]

The volume-average particle diameter of the particulate polymer is preferably not less than 0.05 $\mu$m and not more than 1.0 $\mu$m. When the volume-average particle diameter of the particulate polymer is within the range set forth above, strength and flexibility of a functional layer can be sufficiently increased.

Note that the "volume-average particle diameter of the particulate polymer" referred to in the present disclosure is the particle diameter (D50) at which cumulative volume calculated from a small diameter end of a particle diameter distribution (by volume) measured by laser diffraction reaches 50%.

The glass-transition temperature (Tg) of the particulate polymer is preferably lower than 20°C. When the glass-transition temperature of the particulate polymer is lower than 20°C, flexibility and binding capacity of a functional layer can both be sufficiently increased.

Note that the "glass-transition temperature of the particulate polymer" referred to in the present disclosure can be measured in accordance with JIS K6240 by differential scanning calorimetry.

[Amount of particulate polymer]

The amount of the particulate polymer that can be included in the presently disclosed composition for a functional layer is preferably 0.1 parts by mass or more, more preferably 0.5 parts by mass or more, and even more preferably 1.0 parts by mass or more per 100 parts by mass of the non-conductive particles, and is preferably 15 parts by mass or less, more preferably 10 parts by mass or less, and even more preferably 8 parts by mass or less per 100 parts by mass of the non-conductive particles. By setting the content of the particulate polymer as not less than any of the lower limits set forth above, it is possible to sufficiently improve redispersibility of the non-conductive particles, and it is also possible to sufficiently increase flexibility of a functional layer. Moreover, by setting the content of the particulate polymer as not less than any of the lower limits set forth above, it is possible to sufficiently ensure binding strength and inhibit detachment of the non-conductive particles from a functional layer (i.e., the occurrence of dusting). Furthermore, by setting the content of the particulate polymer as not more than any of the upper limits set forth above, it is possible to sufficiently ensure porosity of a functional layer and inhibit deterioration of output characteristics of a secondary battery.

[Production method of particulate polymer]

The particulate polymer can be produced through polymerization of a monomer composition containing monomers used in polymerization of the particulate polymer, carried out in an aqueous solvent such as water, for example. The proportional content of each monomer in the monomer composition can be set in accordance with the proportional content of each repeating unit (monomer unit) in the particulate polymer.

The polymerization method is not specifically limited and may, for example, be any of solution polymerization, suspension polymerization, bulk polymerization, and emulsion polymerization. Moreover, ionic polymerization, radical polymerization, living radical polymerization, or the like may be adopted as the polymerization reaction.

Additives such as an emulsifier, a dispersant, a polymerization initiator, and a polymerization aid that are used in polymerization can be any of those that are typically used. The used amounts of these additives may also be the same as typically used. The polymerization conditions can be adjusted as appropriate depending on the polymerization method, the type of polymerization initiator, and so forth.

<Additives>

Additives that can optionally be included in the presently disclosed composition for a functional layer are not specifically limited so long as they do not affect battery reactions, and commonly known examples of such additives can be used. One additive may be used individually, or two or more additives may be used in combination.

Known additives such as a surfactant, a dispersant, and so forth may be used as additives, for example.

<<Surfactant>>

An ethylene oxide/propylene oxide surfactant (hereinafter, referred to as an "EO/PO surfactant"), a fluorine-based surfactant, a silicon-based surfactant, or the like can be used as the surfactant without any specific limitations. Of these examples, an EO/PO surfactant or a fluorine-based surfactant is preferable, and an EO/PO surfactant is more preferable.

Specific examples of EO/PO surfactants include polyoxyalkylene glycol surfactants and the like. Specific examples of fluorine-based surfactants include fluoroalkyl esters and the like. Specific examples of silicon-based surfactants include dimethylpolysiloxane and the like. Of these examples, an EO/PO surfactant is preferable as the surfactant.

The content of the surfactant in the composition for a functional layer is preferably 0.05 parts by mass or more, and more preferably 0.1 parts by mass or more per 100 parts by mass of the non-conductive particles, and is preferably 1.0 parts by mass or less, more preferably 0.5 parts by mass or less, and even more preferably 0.3 parts by mass or less per 100 parts by mass of the non-conductive particles. When the content of the surfactant is not less than any of the lower limits set forth above, coatability of the composition for a functional layer can be further improved. Moreover, when the content of the surfactant is not more than any of the upper limits set forth above, heat shrinkage resistance of a functional layer can be further improved.

<<Dispersant>>

An acrylic acid/sulfonic acid monomer copolymer, special sodium polyacrylate, special ammonium polyacrylate, or the like, for example, can be used as the dispersant without any specific limitations.

The content of the dispersant in the composition for a functional layer is preferably 5 parts by mass or less, and more preferably 3 parts by mass or less per 100 parts by mass of the non-conductive particles. When the content of the dispersant is 5 parts by mass or less, residual water content in a functional layer can be further reduced, and heat shrinkage resistance of the functional layer can be further improved.

<Dispersion medium>

The presently disclosed composition for a non-aqueous secondary battery functional layer contains water as a dispersion medium. Note that the composition for a non-aqueous secondary battery functional layer may contain a small amount of a medium other than water, such as an organic solvent, as a dispersion medium.

<Production of composition for non-aqueous secondary battery functional layer>

The presently disclosed composition for a non-aqueous secondary battery functional layer can be obtained by mixing the above-described non-conductive particles, water-soluble polymer, and optional particulate polymer, surfactant, dispersant, and so forth that are used as necessary in the presence of water serving as a dispersion medium, but is not specifically limited to being obtained in this manner.

Although no specific limitations are placed on the mixing method and mixing order of the above-described components, the mixing is preferably performed using a disperser as a mixing device to efficiently disperse the components. The disperser is preferably a device that can uniformly disperse and mix the components. Examples of dispersers that may be used include a ball mill, a sand mill, a bead mill, a pigment disperser, a grinding machine, an ultrasonic disperser, a homogenizer, and a planetary mixer.

<Properties of composition for non-aqueous secondary battery functional layer>

The viscosity of the presently disclosed composition for a functional layer is preferably 10 mPa·s or more, and more preferably 30 mPa·s or more, and is preferably 300 mPa·s or less, and more preferably 200 mPa·s or less. When the viscosity of the composition for a functional layer is within any of the ranges set forth above, coatability of the composition for a functional layer further improves.

<Parameter P>

A parameter P of the presently disclosed composition for a functional layer expressed by the following formula (1), which expresses a ratio of a packing rate determined using the composition for a functional layer relative to a logarithm (Log) of the BET specific surface area of the non-conductive particles contained in the composition for a functional layer, is 35 or more, preferably 35.5 or more, and preferably 36 or more. When the parameter P is 35 or more, it is possible to ensure excellent heat shrinkage resistance and to reduce residual water content in a functional layer even with functional layer thinning and densification.

$$\text{Parameter P = Packing rate of composition for non-aqueous secondary battery functional layer/Log (BET specific surface area of non-conductive particles)} \qquad (1)$$

Note that the packing rate of the composition for a non-aqueous secondary battery functional layer in formula (1) is determined based on the following formula (2) by calculating a material balance from the height of a sediment layer obtained when the composition for a non-aqueous secondary battery functional layer is loaded into a test tube and is subjected to centrifugal sedimentation.

$$\text{Packing rate of composition for non-aqueous secondary battery functional layer (\%) = \{(Solid content in composition for non-aqueous secondary battery functional layer (volume\%)} \times \text{volume of composition for non-aqueous secondary battery functional layer in test tube)/Volume of sediment layer\}} \times 100\% \qquad (2)$$

(Functional layer for non-aqueous secondary battery)

The presently disclosed functional layer for a non-aqueous secondary battery is a layer that is formed from the composition for a non-aqueous secondary battery functional layer set forth above. The presently disclosed functional layer for a non-aqueous secondary battery can be formed, for example, by applying the composition for a functional layer set forth above onto the surface of a suitable substrate to form a coating film, and then drying the coating film that is formed. The presently disclosed functional layer for a non-aqueous secondary battery is formed of a dried product of the composition for a functional layer set forth above and normally contains the specific non-conductive particles and the water-soluble polymer described above.

Moreover, the presently disclosed functional layer for a non-aqueous secondary battery can display excellent heat shrinkage resistance and has low residual water content as a result of being formed using the composition for a functional layer set forth above. Consequently, a non-aqueous secondary battery can be caused to display excellent high-temperature cycle characteristics by using the presently disclosed functional layer for a non-aqueous secondary battery.

<Substrate>

No limitations are placed on the substrate onto which the composition for a functional layer is applied. For example, a separator substrate or an electrode substrate can be used as the substrate.

[Separator substrate]

The separator substrate is not specifically limited and may be a known separator substrate such as an organic separator substrate. The organic separator substrate is a porous member that is formed of an organic material. Examples of the organic separator substrate include microporous membranes and non-woven fabrics that contain a polyolefin resin such as polyethylene or polypropylene, an aromatic polyamide resin, or the like, of which, a polyethylene microporous membrane or non-woven fabric is preferable due to having excellent strength. Although the separator substrate may be of any thickness, the thickness thereof is preferably not less than 5 $\mu$m and not more than 30 $\mu$m, more preferably not less than 5 $\mu$m and not more than 20 $\mu$m, and even more preferably not less than 5 $\mu$m and not more than 18 $\mu$m. A separator substrate thickness of 5 $\mu$m or more enables sufficient stability. Moreover, a separator substrate thickness of 30 $\mu$m or less can suppress an increase of heat shrinkage force of the separator substrate and increase heat shrinkage resistance.

[Electrode substrate]

The electrode substrate (positive electrode substrate or negative electrode substrate) is not specifically limited and may be an electrode substrate obtained by forming an electrode mixed material layer on a current collector.

The current collector, an electrode active material (positive electrode active material or negative electrode active material) and a binder for an electrode mixed material layer (binder for a positive electrode mixed material layer or binder for a negative electrode mixed material layer) in the electrode mixed material layer, and the method by which the electrode mixed material layer is formed on the current collector can be known examples thereof such as any of those described in JP2013-145763A or WO2015/129408A1, for example.

<Formation method of functional layer for non-aqueous secondary battery>

Examples of methods by which the functional layer may be formed on a substrate such as the above-described separator substrate or electrode substrate include:

(1) a method in which the presently disclosed composition for a non-aqueous secondary battery functional layer is applied onto the surface of the separator substrate or electrode substrate (surface at the electrode mixed material layer-side in the case of the electrode substrate; same applies below) and is then dried;
(2) a method in which the separator substrate or electrode substrate is immersed in the presently disclosed composition for a non-aqueous secondary battery functional layer and is then dried; and
(3) a method in which the presently disclosed composition for a non-aqueous secondary battery functional layer is applied onto a releasable substrate and is dried to produce a functional layer that is then transferred onto the surface of the separator substrate or electrode substrate.

Of these methods, method (1) is particularly preferable since it allows simple control of the thickness of the functional layer. In more detail, method (1) includes a step of applying the composition for a functional layer onto a substrate (application step) and a step of drying the composition for a functional layer that has been applied onto the substrate to form a functional layer (functional layer formation step).

[Application step]

Examples of methods by which the composition for a functional layer can be applied onto the substrate in the application step include, but are not specifically limited to, doctor blading, reverse roll coating, direct roll coating, gravure coating, extrusion coating, and brush coating.

[Functional layer formation step]

The composition for a functional layer on the substrate may be dried by any commonly known method in the functional layer formation step without any specific limitations. For example, the drying method may be drying by warm, hot, or low-humidity air; drying in a vacuum; or drying by irradiation with infrared light, electron beams, or the like. Although no specific limitations are placed on the drying conditions, the drying temperature is preferably 50°C to 150°C, and the drying time is preferably 3 minutes to 30 minutes.
Note that from a viewpoint of sufficiently ensuring heat shrinkage resistance of the functional layer, the thickness of the functional layer that is formed in this manner is preferably 0.1 $\mu$m or more, and is preferably 10 $\mu$m or less, more preferably 5 $\mu$m or less, and even more preferably 3 $\mu$m or less.

(Separator for non-aqueous secondary battery)

The presently disclosed separator for a non-aqueous secondary battery (hereinafter, also referred to as a "separator for a secondary battery") includes a functional layer for a non-aqueous secondary battery that has been formed using the presently disclosed composition for a functional layer set forth above. Specifically, the presently disclosed separator for a non-aqueous secondary battery includes the functional layer for a non-aqueous secondary battery set forth above on at least one side of a separator substrate.
The separator substrate that is used in the separator for a secondary battery is not specifically limited, and the separator substrate given as an example of a substrate onto which the composition for a functional layer set forth above is applied can be used.
Moreover, no specific limitations are placed on the method by which the separator for a secondary battery is produced, and the separator for a secondary battery can be produced in accordance with a method previously described in the "Formation method of functional layer for non-aqueous secondary battery" section.

(Non-aqueous secondary battery)

The presently disclosed secondary battery is a secondary battery that includes the presently disclosed separator for a non-aqueous secondary battery set forth above. More specifically, the presently disclosed non-aqueous secondary battery includes a positive electrode, a negative electrode, a separator, and an electrolyte solution, wherein the separator is the presently disclosed separator for a non-aqueous secondary battery set forth above. The presently disclosed secondary battery has excellent high-temperature cycle characteristics as a result of including the separator for a non-aqueous secondary battery.

<Positive electrode, negative electrode, and separator>

The separator that is used in the presently disclosed secondary battery is the presently disclosed separator set forth above. Moreover, the positive electrode and the negative electrode may be any known positive electrode and negative electrode without any specific limitations.

<Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferred as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.
The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.
The concentration of the electrolyte in the electrolyte solution can be adjusted as appropriate. Furthermore, known additives may be added to the electrolyte solution.

(Production method of non-aqueous secondary battery)

The presently disclosed non-aqueous secondary battery can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. Note that the presently disclosed separator for a non-aqueous secondary battery is used as the separator. In order to prevent pressure increase inside the secondary battery and occurrence of overcharging or overdischarging, an overcurrent preventing device such as a fuse or a PTC device, an expanded metal, a lead plate, or the like may be provided as necessary. The shape of the secondary battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.
Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.
In the examples and comparative examples, the following methods were used to measure and evaluate the weight-average molecular weight of a water-soluble polymer, volume-average particle diameter of non-conductive particles, BET specific surface area of non-conductive particles, packing rate of a composition for a functional layer, viscosity of a composition for a functional layer, parameter P, dispersion stability of a composition for a functional layer, coatability of a composition for a functional layer, heat shrinkage resistance of a functional layer, water content of a functional layer, and high-temperature cycle characteristics of a secondary battery.

<Weight-average molecular weight of water-soluble polymer>

An aqueous solution containing a water-soluble polymer produced in each example or comparative example was diluted and adjusted to a concentration of 0.05%. Next, the aqueous solution was filtered through a 0.45 μm membrane filter made of PTFE to obtain a sample. This sample was analyzed by gel permeation chromatography under the following conditions to determine the weight-average molecular weight of the water-soluble polymer.

Apparatus: Gel permeation chromatograph GPC (produced by Agilent Technologies, Inc.; product name: 1260 Infinity II HPLC)
Detector: Differential refractive index detector RI (produced by Agilent Technologies, Inc.; product name: 1260 Infinity II RI detector)
Column: TSKgel GMPWXL × 2 columns (⌀7.8 mm × 30 cm; produced by Tosoh Corporation)
Solvent: 0.1 M Tris buffer solution (pH 9, 0.1 M potassium chloride added)
Flow rate: 0.7 mL/min
Column temperature: 40°C
Injection volume: 0.2 mL
Standard sample: Monodisperse polyethylene oxide (PEO) produced by Tosoh Corporation and Sigma-Aldrich

<Volume-average particle diameter of non-conductive particles>

In a particle diameter distribution (by volume) of non-conductive particles measured by laser diffraction in accordance with JIS Z8825, the particle diameter (D50) at which cumulative volume calculated from a small diameter end of the distribution reached 50% was taken to be the volume-average particle diameter of the non-conductive particles.

<BET specific surface area of non-conductive particles>

The BET specific surface area of non-conductive particles was determined using a wet specific surface area analyzer (FlowSorb III 2305 produced by Shimadzu Corporation).

<Packing rate of composition for functional layer>

A test tube made of polypropylene that had a capacity of 50 mL was loaded with 45 mL of a composition for a functional layer produced in each example or comparative example. The composition for a functional layer that had been loaded into the test tube was subjected to 3 hours of treatment at 4,000 rpm using a centrifuge so as to cause centrifugal sedimentation and obtain a sediment layer. The material balance was calculated from the height of the sediment layer, and the packing rate of the composition for a functional layer was determined according to the following formula.

Packing rate of composition for non-aqueous secondary battery functional layer (%) = {(Solid content in composition for non-aqueous secondary battery functional layer (volume%) × Volume of composition for non-aqueous secondary battery functional layer in test tube)/Volume of sediment layer} × 100%

Note that the volume% solid content in the composition for a functional layer was calculated from the mass% solid content using the specific gravity of each solid component contained in the composition for a functional layer. The specific gravity of each solid component is shown below (units: kg/m$^3$).

Boehmite (AlOOH): 3.0
Aluminum oxide (Al$_2$O$_3$): 4.0
Barium sulfate (BaSO$_4$): 4.5
Ammonium polyacrylate: 1.2
Water-soluble polymer: 1.1
Polyoxyalkylene glycol surfactant (EO/PO): 1.1

<Viscosity of composition for functional layer>

A composition for a functional layer was measured in accordance with JIS Z8803: 1991 using a single-cylinder rotational viscometer (25°C; rotation speed: 60 rpm; spindle shape: 2), and a value at 60 seconds after the start of measurement was taken to be the viscosity of the composition for a functional layer.

<Parameter P>

A parameter P was determined according to the following formula using the BET specific surface area of non-conductive particles and the packing rate of a composition for a functional layer, which were determined as described above.

Parameter P = Packing rate of composition for non-aqueous secondary battery functional layer/Log(BET specific surface area of non-conductive particles)

<Dispersion stability of composition for functional layer>

After loading 1 kg of a composition for a functional layer produced in each example or comparative example into a 1 L plastic bottle, the plastic bottle was left at rest for 10 days. A Mix Rotor was then used to perform 30 minutes of stirring of the entire plastic bottle that had been left at rest. After this stirring, the slurry composition for a functional layer inside the plastic bottle was sampled at within 1 cm of the top, and the collected sample was placed on an aluminum plate and was weighed (mass: WO [g]). The aluminum plate with the sample thereon was placed on a hot plate heated to 130°C for 30 minutes to cause drying and was subsequently weighed (mass: W1 [g]). The solid content of the sampled supernatant was measured according to the following formula (I). Note that a in formula (I) indicates the mass [g] of the aluminum plate.

$$\text{Solid content of supernatant (\%)} = \{(W1 - a)/(W0 - a)\} \times 100\% \cdots (I)$$

After performing stirring, the plastic bottle with the composition for a functional layer loaded therein was weighed (mass: W2 [g]), and then the composition for a functional layer was withdrawn from the plastic bottle, and the plastic bottle was weighed (mass: W3 [g]). The amount of adhered material at the bottom of the bottle was measured according to the following formula (II). Note that b in formula (II) indicates the mass [g] of the empty 1 L plastic bottle.

$$\text{Amount of adhered material (\%)} = \{(W3 - b)/(W2 - b)\} \times 100(\%) \cdots (II)$$

An evaluation was made by the following standard based on the solid content (%) of the supernatant determined from formula (I) and the amount of adhered material (%) determined from formula (II). A larger proportion of solid content in the supernatant and a smaller amount of adhered material after stirring indicate that the composition for a functional layer has higher dispersion stability.

A: Supernatant solid content is 39.5% or more and amount of adhered material is not less than 0% and less than 0.5% after stirring
B: Supernatant solid content is 39.5% or more but amount of adhered material is 0.5% or more after stirring

<Coatability of composition for functional layer>

The external appearance of a functional layer of a separator for a secondary battery (separator including a functional layer at one side) produced in each example or comparative example was visually observed and was evaluated by the following standard. A wider range in which aggregates, streaks, and/or cissing are not observed indicates that a composition for a functional layer has better coatability.

A: Range in which aggregates, streaks, and/or cissing are not observed is 30 cm × 30 cm or more
B: Range in which aggregates, streaks, and/or cissing are not observed is not less than 10 cm × 10 cm and less than 30 cm × 30 cm

<Heat shrinkage resistance of functional layer>

A separator for a secondary battery produced in each example or comparative example was cut out as a square of 12 cm in width by 12 cm in length and then a square having a side length of 10 cm was drawn in an inner part of the cut-out square to obtain a test specimen. The test specimen was placed inside a 150°C constant-temperature tank, was left for 1 hour, and then the area change of the square drawn in the inner part was calculated (= {(area of square before being left - area of square after being left)/area of square before being left} × 100%) as a heat shrinkage rate and was evaluated by the following standard. A smaller heat shrinkage rate indicates that the functional layer has better heat shrinkage resistance.

A: Heat shrinkage rate of less than 10%
B: Heat shrinkage rate of not less than 10% and less than 20%
C: Heat shrinkage rate of 20% or more

<Water content of functional layer>

A separator for a secondary battery produced in each example or comparative example was cut out with a size of 10 cm in width by 10 cm in length to obtain a test specimen. The test specimen was left at a temperature of 25°C and a dew point of -60°C for 24 hours. Thereafter, the water content of the test specimen was measured by the Karl Fischer method (water vaporization method of JIS K-0068(2001); vaporization temperature: 150°C) using a coulometric titration water meter. The determined water content was taken to be the water content of the functional layer and was evaluated by the following standard. A lower water content indicates lower residual water content in the functional layer.

A: Water content of less than 800 ppm
B: Water content of not less than 800 ppm and less than 1,000 ppm
C: Water content of 1,000 ppm or more

<High-temperature cycle characteristics of secondary battery>

A lithium ion secondary battery produced in each example or comparative example was subjected to a charge/discharge operation of charging to 4.2 V by a constant-voltage constant-current (CC-CV) method with a 0.3C charge rate (cut off condition: 0.02C) and discharging to 3.0 V by a constant-current (CC) method with a 1C discharge rate at 45°C, and the initial capacity C0 was measured.

The lithium ion secondary battery was repeatedly subjected to the same charge/discharge operation in a 45°C environment, and the capacity C1 after 300 cycles was measured. The capacity maintenance rate ΔC was calculated (ΔC = (C1/C0) × 100(%)) and was evaluated by the following standard. A higher value for this capacity maintenance rate indicates that there is less reduction of discharge capacity and that the secondary battery has better high-temperature cycle characteristics.

A: Capacity maintenance rate ΔC of 75% or more
B: Capacity maintenance rate ΔC of not less than 60% and less than 75%
C: Capacity maintenance rate ΔC of less than 60%

(Example 1)

<Production of aqueous solution containing water-soluble polymer>

A 2 L septum-equipped flask was charged with 1267 g of deionized water and 34 g of a 2.0% aqueous solution of L-ascorbic acid as a polymerization accelerator. These materials were heated to a temperature of 40°C, and the inside of the flask was purged with nitrogen gas at a flow rate of 100 mL/min. Next, 224 g (86.0%) of acrylamide as an amide group-containing monomer, 23 g (9.0%) of acrylic acid as an acid group-containing monomer, and 13 g (5.0%) of glycidyl methacrylate as a cross-linkable monomer were mixed and were then injected into the flask using a syringe. Thereafter, 36 g of a 5.0% aqueous solution of ammonium persulfate as a polymerization initiator was added into the flask using a syringe, and the reaction temperature was set to 60°C. Once 2 hours had passed, 18 g of a 5.0% aqueous solution of ammonium persulfate as a polymerization initiator and 17 g of a 2.0% aqueous solution of L-ascorbic acid as a polymerization accelerator were added in order to further raise the reaction conversion rate. Once a further 2 hours had passed, 18 g of a 5.0% aqueous solution of ammonium persulfate as a polymerization initiator and 17 g of a 2.0% aqueous solution of L-ascorbic acid as a polymerization accelerator were added. Two hours later, 6.8 g of a 5% aqueous solution of sodium nitrite as a reaction inhibitor was added into the flask and was stirred. Thereafter, the flask was cooled to 40°C and was converted to an air atmosphere. The pH of the system was adjusted to 8.0 using 8% lithium hydroxide aqueous solution to thereby yield an aqueous solution containing a water-soluble polymer A.

The weight-average molecular weight of the obtained water-soluble polymer A was measured. The result is shown in Table 1.

<Production of composition for secondary battery functional layer>

Boehmite particles A (produced by Nabaltec; product name: ACTILOX 200SM; volume-average particle diameter: 0.3 $\mu$m; BET specific surface area: 17 m$^2$/g) were used as non-conductive particles, and ammonium polyacrylate (produced by Toagosei Co., Ltd.; product name: ARON A30SL) was used as a dispersant.

A dispersion liquid was obtained by mixing 100 parts of the non-conductive particles, 1.0 parts of the dispersant, and deionized water and processing these materials for 1 hour using a bead mill (produced by Ashizawa Finetech Ltd.; product name: LMZ015). In addition, 2.5 parts in terms of solid content of the aqueous solution containing a water-soluble polymer obtained as described above and 0.2 parts of a polyoxyalkylene glycol surfactant (produced by San Nopco Limited; product name: NOPTECHS ED-052) were mixed so as to produce a composition for a functional layer having a solid content concentration of 40%.

The composition for a functional layer obtained in this manner was used to determine the packing rate of the composition for a functional layer. Moreover, the parameter P (= packing rate of composition for functional layer/Log(BET specific surface area)) was evaluated from the determined packing rate of the composition for a functional layer and the BET specific surface area of the non-conductive particles, and the viscosity of the composition for a functional layer, the dispersion stability of the composition for a functional layer, and the coatability of the composition for a functional layer were also evaluated. The results are shown in Table 1.

<Production of separator for secondary battery>

A separator substrate made of polyethylene (produced by Asahi Kasei Corporation; product name: ND412; thickness: 12 $\mu$m) was prepared as a separator substrate. The composition for a functional layer produced as described above was applied onto one side of the separator substrate at a rate of 10 m/min using a gravure coater and was then dried in a 50°C drying furnace to obtain a functional layer-equipped separator (functional layer thickness: 2 $\mu$m) including a functional layer at one side of the separator substrate.

The functional layer-equipped separator obtained in this manner was used as a separator for a secondary battery to evaluate the heat shrinkage resistance and water content of the functional layer. The results are shown in Table 1.

<Production of negative electrode>

A 5 MPa pressure-resistant vessel equipped with a stirrer was charged with 33 parts of 1,3-butadiene as an aliphatic conjugated diene monomer, 3.5 parts of itaconic acid as a carboxy group-containing monomer, 63.5 parts of styrene as an aromatic vinyl monomer, 0.4 parts of sodium dodecylbenzenesulfonate as an emulsifier, 150 parts of deionized water, and 0.5 parts of potassium persulfate as a polymerization initiator. These materials were sufficiently stirred and were then heated to 50°C to initiate polymerization. The polymerization reaction was quenched by cooling at the point at which the polymerization conversion rate reached 96% to yield a mixture containing a particulate binder (styrene-butadiene copolymer). The mixture was adjusted to pH 8 through addition of 5% sodium hydroxide aqueous solution and was then subjected to thermal-vacuum distillation to remove unreacted monomer. Thereafter, the mixture was cooled to 30°C or lower to yield a water dispersion containing a binder for a negative electrode.

A planetary mixer was charged with 48.75 parts of artificial graphite (theoretical capacity: 360 mAh/g) and 48.75 parts of natural graphite (theoretical capacity: 360 mAh/g) as negative electrode active materials and 1 part (in terms of solid content) of carboxymethyl cellulose as a thickener. These materials were diluted to a solid content concentration of 60% with deionized water and were subsequently kneaded at a rotation speed of 45 rpm for 60 minutes. Thereafter, 1.5 parts in terms of solid content of the water dispersion containing the binder for a negative electrode obtained as described above was added and was kneaded therewith at a rotation speed of 40 rpm for 40 minutes. The viscosity was then adjusted to 3,000 $\pm$ 500 mPa·s (measured by B-type viscometer at 25°C and 60 rpm) through addition of deionized water to produce a slurry composition for a negative electrode mixed material layer.

The slurry composition for a negative electrode mixed material layer was applied onto the surface of copper foil of 15 $\mu$m in thickness serving as a current collector by a comma coater such as to have a coating weight of 11 $\pm$ 0.5 mg/cm$^2$. The copper foil having the slurry composition for a negative electrode mixed material layer applied thereon was subsequently conveyed inside an oven having a temperature of 80°C for 2 minutes and an oven having a temperature of 110°C for 2 minutes at a speed of 400 mm/min so as to dry the slurry composition on the copper foil and thereby obtain a negative electrode web having a negative electrode mixed material layer formed on the current collector.

Thereafter, the negative electrode mixed material layer-side of the produced negative electrode web was roll pressed with a line pressure of 11 t (tons) in an environment having a temperature of 25 $\pm$ 3°C to obtain a negative electrode having a negative electrode mixed material layer density of 1.60 g/cm$^3$.

<Production of positive electrode>

A slurry composition for a positive electrode mixed material layer was produced by loading 96 parts of an active material NMC532 (LiNi$_{0.5}$Mn$_{0.3}$Co$_{0.2}$O$_2$) based on a lithium complex oxide of Co-Ni-Mn as a positive electrode active material, 2 parts of acetylene black (produced by Denka Company Limited; product name: HS-100) as a conductive material, and 2 parts of polyvinylidene fluoride (produced by Kureha Corporation; product name: KF-1100) as a binder into a planetary mixer, further adding N-methyl-2-pyrrolidone (NMP) as a dispersion medium to adjust the total solid content concentration to 67%, and mixing these materials.
Next, the obtained slurry composition for a positive electrode mixed material layer was applied onto aluminum foil of 20 μm in thickness serving as a current collector by a comma coater such as to have a coating weight of 20 ± 0.5 mg/cm$^2$.
The aluminum foil was conveyed inside an oven having a temperature of 90°C for 2 minutes and an oven having a temperature of 120°C for 2 minutes at a speed of 200 mm/min so as to dry the slurry composition on the aluminum foil and thereby obtain a positive electrode web having a positive electrode mixed material layer formed on the current collector.
Thereafter, the positive electrode mixed material layer-side of the produced positive electrode web was roll pressed with a line pressure of 14 t (tons) in an environment having a temperature of 25 ± 3°C to obtain a positive electrode having a positive electrode mixed material layer density of 3.20 g/cm$^3$.

<Production of lithium ion secondary battery>

The post-pressing positive electrode and negative electrode and the separator for a secondary battery obtained as described above were each cut out. A surface at the functional layer-side of the cut-out separator for a secondary battery was arranged facing the positive electrode mixed material layer of the cut-out post-pressing positive electrode. Moreover, a surface of the negative electrode mixed material layer of the cut-out post-pressing negative electrode was arranged facing an uncoated surface of the arranged separator for a secondary battery (surface not in contact with the positive electrode) so as to obtain a battery member laminate (positive electrode/functional layer/separator substrate/negative electrode).
Next, the obtained laminate was enclosed in an aluminum packing case serving as a battery case, and electrolyte solution (solvent: ethylene carbonate (EC)/diethyl carbonate (DEC) = 30/70 (weight ratio); electrolyte: LiPF$_6$ of 1 mol/L in concentration; additive: 2 volume% vinylene carbonate (solvent ratio)) was injected such that no air remained. Next, an opening of the aluminum packing case was heat sealed at a temperature of 150°C to tightly close the aluminum packing case and thereby produce a 40 mAh stacked lithium ion secondary battery.
This lithium ion secondary battery was used to evaluate high-temperature cycle characteristics. The result is shown in Table 1.

(Examples 2 and 3)

In production of the aqueous solution containing a water-soluble polymer in Example 1, the amounts of acrylamide, acrylic acid, and glycidyl methacrylate that were used were changed such that the proportional contents of various monomer units in the obtained water-soluble polymer were the proportions shown in Table 1. With the exception of the above, an aqueous solution containing a water-soluble polymer B (Example 2) or an aqueous solution containing a water-soluble polymer C (Example 3) was produced in the same way as in Example 1. Moreover, a composition for a functional layer, a separator for a secondary battery, a negative electrode, a positive electrode, and a lithium ion secondary battery were prepared or produced in the same way as in Example 1 with the exception that the aqueous solution containing the water-soluble polymer B (Example 2) or the aqueous solution containing the water-soluble polymer C (Example 3) was used instead of the aqueous solution containing the water-soluble polymer A. Furthermore, various measurements and evaluations were performed in the same way as in Example 1. The results are shown in Table 1.

(Example 4)

In production of the aqueous solution containing a water-soluble polymer in Example 1, 13 g (5.0%) of N-methylolacrylamide was used instead of glycidyl methacrylate as a cross-linkable monomer so as to produce an aqueous solution containing a water-soluble polymer D. Moreover, a composition for a functional layer, a separator for a secondary battery, a negative electrode, a positive electrode, and a secondary battery were prepared or produced in the same way as in Example 1 with the exception that the aqueous solution containing the water-soluble polymer D was used instead

EP 4 411 966 A1

of the aqueous solution containing the water-soluble polymer A. Furthermore, various measurements and evaluations were performed in the same way as in Example 1. The results are shown in Table 1.

(Examples 5 to 7)

In production of the composition for a functional layer in Example 1, alumina A particles (Example 5: produced by Sumitomo Chemical Co., Ltd.; product name: AKP-20; volume-average particle diameter: 0.42 $\mu$m; BET specific surface area: 4.6 m$^2$/g) were used instead of boehmite A particles as non-conductive particles in Example 5, alumina B particles (produced by Sumitomo Chemical Co., Ltd.; product name: AKP-53; volume-average particle diameter: 0.17 $\mu$m; BET specific surface area: 13.7 m$^2$/g) were used instead of boehmite A particles as non-conductive particles in Example 6, and barium sulfate particles (produced by Takehara Kagaku Kogyo Co., Ltd.; product name: TS-2; volume-average particle diameter: 0.36 $\mu$m; BET specific surface area: 7.5 m$^2$/g) were used instead of boehmite A particles as non-conductive particles in Example 7. With the exception of the above, a composition for a functional layer, a separator for a secondary battery, a negative electrode, a positive electrode, and a secondary battery were prepared or produced in the same way as in Example 1. Furthermore, various measurements and evaluations were performed in the same way as in Example 1. The results are shown in Table 1.

(Comparative Example 1)

In production of the aqueous solution containing a water-soluble polymer in Example 1, the amounts of acrylamide and acrylic acid that were used were changed and glycidyl methacrylate was not used such that the proportional contents of various monomer units in the obtained water-soluble polymer were the proportions shown in Table 1, and thus an aqueous solution containing a water-soluble polymer E was produced. Moreover, a composition for a functional layer, a separator for a secondary battery, a negative electrode, a positive electrode, and a secondary battery were prepared or produced in the same way as in Example 1 with the exception that the aqueous solution containing the water-soluble polymer E was used instead of the aqueous solution containing the water-soluble polymer A. Furthermore, various measurements and evaluations were performed in the same way as in Example 1. The results are shown in Table 1.

(Comparative Examples 2 and 3)

In production of the composition for a functional layer in Example 1, boehmite B particles (produced by Nabaltec; product name: APYRAL AOH 60; volume-average particle diameter: 0.9 $\mu$m; BET specific surface area: 6 m$^2$/g) were used instead of boehmite A particles as non-conductive particles in Comparative Example 2, and boehmite C particles (produced by Nabaltec; product name: APYRAL AOH EXK 012-20; volume-average particle diameter: 0.12 $\mu$m; BET specific surface area: 45 m$^2$/g) were used instead of boehmite A particles as non-conductive particles in Comparative Example 3. With the exception of the above, a composition for a functional layer, a separator for a secondary battery, a negative electrode, a positive electrode, and a secondary battery were prepared or produced in the same way as in Example 1. Furthermore, various measurements and evaluations were performed in the same way as in Example 1. The results are shown in Table 1.

[Table 1]

| | | | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|---|---|
| Composition for functional layer | Water-soluble polymer | Chemical composition | Type | Water-soluble polymer A | Water-soluble polymer B | Water-soluble potymer C | Water-soluble polymer D | Water-soluble polymer A | Water-soible polymer A | Water-soluble polymer A | Water-soluble polymer E | Water-soluble polymer A | Water-soluble polymer A |
| | | | Amide group-containing monomer unit — Type | AAm | AAm | AAm | AAm | AAm | AAm | AAm | AAm | AAm | AAm |
| | | | Amide group-containing monomer unit — Proportional content [mass%] | 86.0 | 820 | 89.0 | 86.0 | 86.0 | 86.0 | 86.0 | 98.0 | 86.0 | 86.0 |
| | | | Acid group-containing monomer unit — Type | AA | AA | AA | AA | AA | AA | AA | AA | AA | AA |
| | | | Acid group-containing monomer unit — Proportional content [mass%] | 9.0 | 8.0 | 10.9 | 9.0 | 9.0 | 9.0 | 9.0 | 2.0 | 9.0 | 9.0 |
| | | | Cross-linkable monomer unit — Type | GMA | GMA | GMA | NMA | GMA | GMA | GMA | - | GMA | GMA |
| | | | Cross-linkable monomer unit — Proportional content [mass%] | 5.0 | 100 | 0.1 | 5.0 | 5.0 | 5.0 | 5.0 | - | 5.0 | 5.0 |
| | | Weight-average molecular weight (Mw) [-] | | 300,000 | 800,000 | 50,000 | 350,000 | 300,000 | 300,000 | 300,000 | 40,000 | 300,000 | 300,000 |
| | | Amount [parts by mass] | | 2.5 | 2.5 | 2.5 | 2.5 | 2.5 | 2.5 | 2.5 | 2.5 | 2.5 | 2.5 |

| | | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|---|
| Non-conductive particles | | Type | Boehmite A | Boehmite A | Boehmite A | Boelmite A | Alumina A | Alumina B | Barium sulfate | Boehmite A | Boehmite B | Boehmite C |
| | | Volume-average particle diameter [μm] | 0.3 | 0.3 | 0.3 | 0.3 | 0.42 | 0.17 | 0.36 | 0.3 | 0.9 | 0.12 |
| | | BET specific surface area [m²/g] | 17 | 17 | 17 | 17 | 4.6 | 13.7 | 7.5 | 17 | 6 | 45 |
| | | Amount [parts by mass] | 100 | 100 | 100 | 100 | 100 | 100 | 100 | 100 | 100 | 100 |
| Dispersant | | Type | PAA | PAA | PAA | PAA | PAA | PAA | PAA | PAA | PAA | PAA |
| | | Amount [parts by mass] | 1 | 1 | 1 | 1 | 1 | 1 | 1 | 1 | 1 | 1 |
| Surfactant | | Type | EO/PO | EO/PO | EO/PO | EO/PO | EO/PO | EO/PO | EO/PO | EO/PO | EO/PO | EO/PO |
| | | Amount [parts by mass] | 0.2 | 0.2 | 0.2 | 0.2 | 0.2 | 0.2 | 0.2 | 0.2 | 0.2 | 0.2 |
| Viscosity [mPa·s] | | | 183 | 220 | 161 | 185 | 183 | 183 | 184 | 148 | 166 | 221 |
| Parameter P (= Packing rate of composition for functional layer/ Log(BET specific area)) [-] | | | 40 | 40 | 40 | 40 | 36 | 42.4 | 39 | 33 | 25 | 34 |

(continued)

| Evaluation | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|
| Evaluation | Dispersion stability of composition for functional layer | A | A | A | A | A | A | A | B | A | A |
| | Coatability of composition for functional layer | A | B | A | A | A | A | A | B | A | A |
| | Heat shrinkage resistance of functional layer | A | A | B | A | B | A | A | C | C | A |
| | Water content of functional layer | A | A | A | A | A | A | A | B | A | C |
| | High-temperature cycle characteristics of secondary battery | A | A | B | A | B | B | A | C | C | C |

In Table 1:
"AAm" indicates acrylamide unit;
"AA" indicates acrylic acid unit;
"GMA" indicates glycidyl methacrylate unit;
"NMA" indicates N-methylolacrylamide unit;
"PAA" indicates ammonium polyacrylate; and
"EO/PO" indicates polyoxyalkylene glycol surfactant.

It can be seen from Table 1 that a functional layer having excellent heat shrinkage resistance and low residual water content is obtained by using the composition for a functional layer of each of Examples 1 to 7. It can also be seen that a secondary battery including a separator for a secondary battery formed using the composition for a functional layer of any of Examples 1 to 7 has excellent high-temperature cycle characteristics.

In contrast, it can be seen from Table 1 that a functional layer having excellent heat shrinkage resistance and low residual water content is not obtained by using the composition for a functional layer of each of Comparative Examples 1 to 3. It can also be seen that a secondary battery including a separator for a secondary battery formed using the composition for a functional layer of any of Comparative Examples 1 to 3 has poor high-temperature cycle characteristics.

INDUSTRIAL APPLICABILITY

According to the present disclosure, it is possible to provide a composition for a secondary battery functional layer that can form a functional layer for a non-aqueous secondary battery having excellent heat shrinkage resistance and low water content.

Moreover, according to the present disclosure, it is possible to provide a functional layer for a secondary battery and a separator for a secondary battery that can cause a secondary battery to display excellent high-temperature cycle characteristics.

Furthermore, according to the present disclosure, it is possible to provide a secondary battery having excellent high-temperature cycle characteristics.

**Claims**

1. A composition for a non-aqueous secondary battery functional layer comprising non-conductive particles, a water-soluble polymer, and water, wherein

   the non-conductive particles have a BET specific surface area of 25 m$^2$/g or less, and
   the composition for a non-aqueous secondary battery functional layer has a parameter P, expressed by formula (1), shown below:

   Parameter P = Packing rate of composition for non-aqueous secondary battery functional layer/Log(BET specific surface area of non-conductive particles)　　(1)

   of 35 or more, given that a packing rate of the composition for a non-aqueous secondary battery functional layer in formula (1) is determined based on formula (2), shown below:

   packing rate of composition for non-aqueous secondary battery functional layer (%)
   = {(solid content in composition for non-aqueous secondary battery functional layer (volume%) × volume of composition for non-aqueous secondary battery functional layer in test tube)/volume of sediment layer} × 100%　　(2)

   by calculating a material balance from height of a sediment layer obtained when the composition for a non-aqueous secondary battery functional layer is loaded into a test tube and is subjected to centrifugal sedimentation.

2. The composition for a non-aqueous secondary battery functional layer according to claim 1, wherein the water-soluble polymer includes a cross-linkable monomer unit, and proportional content of the cross-linkable monomer unit in the water-soluble polymer is not less than 0.1 mass% and not more than 10 mass%.

3. The composition for a non-aqueous secondary battery functional layer according to claim 1, wherein the composition for a non-aqueous secondary battery functional layer has a viscosity of not less than 10 mPa·s and not more than 300 mPa·s.

4. The composition for a non-aqueous secondary battery functional layer according to claim 1, wherein the water-soluble polymer has a weight-average molecular weight of not less than 50,000 and not more than 1,000,000.

5. The composition for a non-aqueous secondary battery functional layer according to claim 1, wherein the non-conductive particles have a volume-average particle diameter of not less than 0.05 μm and not more than 0.45 μm.

6. The composition for a non-aqueous secondary battery functional layer according to claim 1, wherein the water-soluble polymer includes an amide group-containing monomer unit, and proportional content of the amide group-containing monomer unit in the water-soluble polymer is not less than 70 mass% and not more than 98 mass%.

7. The composition for a non-aqueous secondary battery functional layer according to claim 1, wherein the water-soluble polymer includes an acid group-containing monomer unit, and proportional content of the acid group-containing monomer unit in the water-soluble polymer is not less than 1 mass% and not more than 20 mass%.

8. The composition for a non-aqueous secondary battery functional layer according to claim 1, further comprising a surfactant, wherein content of the surfactant is not less than 0.1 parts by mass and not more than 1.0 parts by mass per 100 parts by mass of the non-conductive particles.

9. A functional layer for a non-aqueous secondary battery formed using the composition for a non-aqueous secondary battery functional layer according to claim 1.

10. A separator for a non-aqueous secondary battery comprising the functional layer for a non-aqueous secondary battery according to claim 9.

11. A non-aqueous secondary battery comprising the separator for a non-aqueous secondary battery according to claim 10.

## INTERNATIONAL SEARCH REPORT

| International application No. |
| :--- |
| **PCT/JP2022/033952** |

| A. | CLASSIFICATION OF SUBJECT MATTER |
| :--- | :--- |

*H01M 50/489*(2021.01)i; *H01M 4/13*(2010.01)i; *H01M 50/414*(2021.01)i; *H01M 50/423*(2021.01)i; *H01M 50/434*(2021.01)i; *H01M 50/443*(2021.01)i; *H01M 50/446*(2021.01)i
FI: H01M50/489; H01M50/414; H01M50/423; H01M50/443 M; H01M50/434; H01M50/446; H01M4/13

According to International Patent Classification (IPC) or to both national classification and IPC

| B. | FIELDS SEARCHED |
| :--- | :--- |

Minimum documentation searched (classification system followed by classification symbols)

H01M50/489; H01M4/13; H01M50/414; H01M50/423; H01M50/434; H01M50/443; H01M50/446

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| :--- | :--- |

| Category* | Citation of document, with indication, where appropriate, of the relevant passages | Relevant to claim No. |
| :---: | :--- | :---: |
| X | WO 2015/122322 A1 (ZEON CORPORATION) 20 August 2015 (2015-08-20) claims 1-6, paragraphs [0010], [0013], [0024]-[0025], [0028]-[0041], [0045], [0096], [0122], [0152]-[0155], examples 1-8 | 1-7, 9-11 |
| Y | | 2-4, 6-8 |
| X | WO 2021/029397 A1 (TORAY INDUSTRIES, INC.) 18 February 2021 (2021-02-18) claims 1-9, paragraphs [0065]-[0092], [0120]-[0122], example 13 | 1, 5, 8-11 |
| Y | | 2-4, 6-8 |
| Y | WO 2021/059880 A1 (ZEON CORPORATION) 01 April 2021 (2021-04-01) claim 1, paragraphs [0066]-[0067] | 8 |
| A | JP 2013-105521 A (NISSAN MOTOR CO LTD) 30 May 2013 (2013-05-30) | 1-11 |
| A | JP 2014-179321 A (SAMSUNG SDI CO LTD) 25 September 2014 (2014-09-25) | 1-11 |

☐ Further documents are listed in the continuation of Box C.  ☑ See patent family annex.

| | | | |
| :--- | :--- | :--- | :--- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| :--- | :--- |
| **08 November 2022** | **22 November 2022** |

| Name and mailing address of the ISA/JP | Authorized officer |
| :--- | :--- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

| | International application No. |
| --- | --- |
| | **PCT/JP2022/033952** |

| Patent document cited in search report | | | Publication date (day/month/year) | Patent family member(s) | | | Publication date (day/month/year) |
| --- | --- | --- | --- | --- | --- | --- | --- |
| WO | 2015/122322 | A1 | 20 August 2015 | US 2016/0344007 A1 claims 1-6, paragraphs [0017], [0022], [0032]-[0033], [0036]-[0052], [0059], [0113], [0145], [0198]-[0207], examples 1-8 CN 105934838 A KR 10-2016-0121513 A | | | |
| WO | 2021/029397 | A1 | 18 February 2021 | EP 4016568 A1 claims 1-9, paragraphs [0065]-[0092], [0123]-[0126], example 13 CN 114207927 A KR 10-2022-0039736 A | | | |
| WO | 2021/059880 | A1 | 01 April 2021 | EP 4036133 A1 claim1, paragraphs [0113]-[0115] CN 114175383 A | | | |
| JP | 2013-105521 | A | 30 May 2013 | US 2014/0287295 A1 WO 2013/069399 A1 EP 2779276 A1 CN 103918104 A KR 10-2014-0072903 A | | | |
| JP | 2014-179321 | A | 25 September 2014 | US 2014/0272532 A1 EP 2779277 A1 KR 10-2014-0112384 A CN 104051689 A | | | |

Form PCT/ISA/210 (patent family annex) (January 2015)

**EP 4 411 966 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021020061 A1
- WO 2017195564 A1
- WO 2015122322 A1
- JP 2013145763 A
- WO 2015129408 A1